# EUROPEAN PATENT SPECIFICATION

(11) **EP 3 320 250 B1**
(45) Date of publication and mention of the grant of the patent: **04.09.2019**
(21) Application number: 16751646.7
(22) Date of filing: 01.07.2016
(51) Int. Cl.: F16L 37/084, F16L 37/12

(54) **QUICK COUPLING**
SCHNELLKUPPLUNG
RACCORD RAPIDE

(30) Priority: 09.07.2015 IT UB20152020
(43) Date of publication of application: 16.05.2018
(73) Proprietor: Polo S.R.L., 23841 Annone di Brianza (LC) (IT)
(72) Inventor: POZZI, Marco, 23900 Lecco (IT); LOCATELLI, Silvia, 23900 Lecco (IT)
(74) Representative: Brasca, Marco
(86) International application number: PCT/IB2016/053958
(87) International publication number: WO 2017/006225

(56) References cited:
- EP-A1- 2 280 208
- DE-U1- 29 702 993
- US-A- 5 788 289
- US-A- 5 934 709
- US-A1- 2012 086 202

## Description

### Technical field of the invention

The object of the present invention is a quick coupling. In particular, the object of the present invention is a device for quick connection of a conduit of a circuit crossed by a fluid to a threaded or profiled male or female terminal. The invention relates to the field of quick couplings able to quickly and securely realise the connecting and disconnecting operations of two different conduits crossed by fluids, while obviating the onerous operations of manual locking that require the use of keys or other tools and ensuring the mechanical seal and the hermetic seal. The use of these quick couplings becomes necessary, for example but not exclusively, when functional tests are carried out on products requiring connection to pneumatic/oil-dynamic/hydraulic circuits (for example: boilers, radiators, engines, pumps, hydraulic/pneumatic cylinders, valves etc.). In particular, the device of the present invention may be used in many varied fields, in which pressure and flow rate of use can vary from negative values (presence of vacuum) to very high values.

### Prior Art

Quick couplings are known that are manually activatable in a push-pull mode, in which the connection step is done by gripping an external ring nut of the coupling and pushing the coupling against the terminal it is to be coupled with until the coupling is hooked and mechanically retained, and the disconnecting step is done once more by acting on said external ring nut.

For example, the prior art document EP 1876381 describes a quick coupling for threaded terminals. An end of this coupling destined to receive the terminal is provided with an annular connection body made up of a plurality of annular segments elastically joined to one another by means of an elastic ring and having, internally or externally according to the type of terminal to be connected, a threading or profiling configured for carrying out the connection to the terminal.

Prior-art document WO 2013/175351 illustrates a quick coupling for threaded or profiled terminals which comprises: a central body extending between an upper end sealingly connectable to a terminal and a lower end connectable to a circuit; a hooking clamp associated to the central body and operable at least between a first configuration, in which it is not hooked to the terminal and enables insertion and de-insertion of the central body into and from the terminal, and a second configuration, in which it is hooked to the terminal and connects the central body thereto; activating means movably active on the central body and on the hooking clamp for enabling passage of the hooking clamp between the first and the second configuration and, consequently, the coupling and decoupling of the central body to and from the terminal. The hooking clamp comprises a base collar and a plurality of flexible elements that extend axially from a same side of the collar in circumferentially flanked positions and are separated from one another by longitudinal slits. The Applicant has observed that known quick couplings, such as the ones described in the foregoing, can be improved in various ways, in particular with reference to the mechanical elements of the couplings that enter into direct contact with the terminals and with reference to the activating systems of said mechanical elements.

The Applicant has in fact, for example, noted that the annular sectors known from document EP 1876381, as they are moved by means of a simple elastic ring, do not guarantee a precise coupling with the terminal and can be subject to a deterioration in performance over time.

The Applicant has also observed that the hooking obtained by the flexion of the flexible elements, as in WO 2013/175351, does not guarantee the necessary safety and precision. The Applicant has further observed that the hooking clamp of the type illustrated in WO 2013/175351 must necessarily have sufficiently long arms in order to provide the necessary radial opening/closing of the ends thereof and that this not only does not guarantee a secure and precise coupling, neither does it have the capacity to reduce the longitudinal dimensions of the coupling.

US 5934709 discloses a fluid coupling. Male and female coupling members are releasably interconnectable for interconnecting fluid flow lines. The female coupling member has an inlet for receiving an inlet of the male coupling member. A locking mechanism exerts a retaining influence on the male coupling member, when received within the female coupling member, to connect the coupling members together. A lock release mechanism is operable to remove the retaining influence of the locking mechanism and release the coupling members. The locking mechanism is carried in the female coupling body, and includes a plurality of locking elements which are slidably retained within a circumferential retaining recess provided in the female coupling body.

### Aim of the invention

In this context, the Applicant has set the objective of proposing a quick coupling that is qualitatively superior and possibly more economical and also more compact than those of the prior art.

The Applicant has in particular concentrated its aim on disclosing a quick coupling that ensures a mechanical hooking (with the respective threaded or profiled terminal) that is more precise and secure than terminals of known type and thus also guarantees a secure seal even in the presence of high-pressure fluids.

The Applicant also has the aim of disclosing a quick coupling that, being appropriately dimensioned, enables managing small or even very small tubes. For example the Applicant has set the aim of providing a quick coupling that enables managing a connection internally of threaded or profiled holes starting from very small diameters, for example from a minimum of about 8mm.

The Applicant also aims at disclosing a quick coupling that is of modest dimensions and is in particular axially compact.

The Applicant also aims at disclosing a quick coupling that is simple to realise, assemble and disassemble.

### Summary of the invention

The Applicant has found that these objectives and aims can be attained by a quick coupling according to the present invention, of the type claimed in the appended claims and/or described in the following aspects. In particular, the quick coupling according to the invention comprises a plurality of jaws which open and close radially without flexing and/or inclining but which are instead guided in the radial movement thereof by means of a guide ring provided with radial guides.

According to an aspect, the present invention relates to a quick coupling for threaded or profiled terminals, comprising:
a substantially tubular main body internally delimiting a passage conduit for a fluid, wherein said main body has a first end configured for removably connecting to a terminal and a second end opposite the first end and configured for connecting with a circuit;
a plurality of jaws arranged about a main axis of the passage conduit and operatively engaged with the main body at the first end, wherein each of said jaws is radially mobile with respect to the main body between a first unhooked position from the terminal and a second hooked position to the terminal;
activating devices operatively engaged with said jaws for determining the passage between the first position and the second position;
a guide ring coaxial to the main body and having radial guides engaged to the plurality of jaws for radially guiding the jaws during movement between the first and the second position.

The Applicant has verified that the radial guides in which the jaws are engaged enable obtaining a precise and fluid radial translation of the jaws during the movement between the first and the second position while the circumferential position of one jaw with respect to another remains unvaried. These characteristics enable obtaining a stable and precise hooking of the terminal.

Further, the Applicant has further verified that the structure of the invention (jaws and ring with radial guides) enables constructing small couplings for terminals having small dimensions (for example a diameter starting from about 8mm) without complications (and therefore high costs) linked to excessive miniaturisation of the components of the coupling. In fact, both the guide ring and the jaws are obtainable with precisions and relative simplicity even if they are realised for small terminals.

In an aspect, each jaw comprises an engaging portion with the terminal and a guide portion configured for slidably coupling with one of the radial guides.

In an aspect, each jaw has an axially elongate shape, wherein a first axial end of the jaw has the engaging portion and a second axial end of the jaw, opposite the first, has the guide portion.

In an aspect, each jaw has an annular sector profile or a tubular sector.

The number of jaws is preferably comprised between three and twelve, preferably between four and eight and more preferably is six in number.

The radial guides are preferably in a number equal to the jaws. The radial guides are preferably angularly equidistanced.

In an aspect, the jaws are fashioned from an appropriately profiled single tubular body which is cut along axial planes, i.e. flat and containing the main axis. The annular sectors of said jaws preferably all have the same angular amplitude.

In an aspect, each radial guide is a radial relief engaged in a radial groove of the respective jaw.

In a different aspect, each radial guide is a radial relief engaged in a radial groove of the respective jaw.

In other words, the guide ring has a face provided with reliefs or radial grooves and said face is coupled to the second axial ends of the jaws. Each of said second ends is slidably coupled to a relief/groove of the guide ring so as to be able to radially translate. Each jaw on the other hand cannot rotate with respect to the guide ring about the main axis.

In an aspect, the guide ring is free to rotate together with the jaws with respect to the main body and about the main axis.

According to the invention, during the radial movement between the first and the second position, the jaws are configured for remaining parallel to one another and to the main axis. The jaws therefore do not flex nor tilt during radial translation thereof.

In an aspect, the activating devices comprise a substantially tubular auxiliary body that is axially slidable with respect to the main body.

In an aspect, said auxiliary body has an operating portion engaged or engageable with the jaws.

In an aspect, the auxiliary body is axially mobile with respect to the main body between a retracted position with respect to the engaging portions of the jaws corresponding to the unhooked position of the jaws, and an advanced position, in which it pushes the jaws radially into the second hooked position to the terminal.

In an aspect, the coupling comprises a substantially tubular obturator that is coaxial with respect to the main body.

In an aspect, the obturator is axially mobile with respect to the main body between an advanced position towards the engaging portion of the jaws, in which it radially and at least partly surmounts the engaged portions of the jaws so as to retain them in the first unhooked position from the terminal, and a retracted position in which it frees the engaging portions and enables radial movement of the jaws.

The combined action of the auxiliary body and the obturator causes the radial movement of the jaws both in opening and closing while they are guided by the guide ring.

In an aspect, the quick coupling is female and in the first position the jaws are radially farther from the main axis with respect to the second position.

In a different aspect, the quick coupling is male and in the first position the jaws are radially closer to the main axis with respect to the second position.

In an aspect, if the coupling is female, the jaws of said plurality of jaws, when in the first position, are circumferentially distanced from one another and, preferably, when in the second position are circumferentially flanked to one another.

In an aspect, if the coupling is male, the jaws of said plurality of jaws, when in the first position, are circumferentially flanked to one another and, preferably, when in the second position are circumferentially distanced from one another.

In an aspect, the auxiliary body comprises a ring nut that is radially external of the main body and mobile axially on the main body.

In an aspect, if the coupling is female, the operating portion is a radially internal surface of the ring nut.

In an aspect, if the coupling is male, the auxiliary body comprises a radially internal body with respect to the main body and solidly connected to the ring nut, wherein said operating portion is a radially external surface of the radially internal body.

In an aspect, if the coupling is male, the quick coupling comprises at least a connecting element solidly connected to the ring nut and to the radially internal body and passing through a slot fashioned in the main body. If the coupling is male, each of the jaws preferably has a radially internal relief positioned at the engaging portion, wherein the operating portion acts on the radially internal relief. In an aspect, if the coupling is female, each of the jaws has a radially external relief positioned at the engaging portion, wherein the operating portion acts on the radially external relief.

In an aspect, the radially internal relief (male coupling) or the radially external relief (female coupling) defines an inclined surface relative to the main axis connected to a substantially parallel surface to the main axis.

In an aspect, if the coupling is male, the operating portion of the radially internal body comprises a terminal end of said radially internal body configured for acting against the inclined surface of the radially internal relief. Preferably, if the coupling is male, the operating portion of the radially internal body comprises a truncoconical surface located at the guide portions of the jaws and converging towards said terminal end. Preferably, if the coupling is male, the operating portion of the radially internal body comprises a first cylindrical surface located between the truncoconical surface and the terminal end. Preferably, if the coupling is male, the operating portion of the radially internal body comprises a second cylindrical surface having a larger diameter than the first cylindrical surface and connected to the truncoconical surface. Preferably, the second portions of the jaws each have a bevel configured for acting against said truncoconical surface.

In an aspect, if the coupling is female, the operating portion comprises an annular surface connected to a diverging truncoconical surface, in which said diverging truncoconical surface is configured for acting against the inclined surface of the radially external relief.

In an aspect, the quick coupling comprises a substantially tubular obturator that is axially coaxial with respect to the main body, wherein the obturator is mobile axially with respect to the main body, wherein said obturator has a head end destined to come into contact with the terminal. The obturator preferably comprises a seal located on the head end for ensuring a hermetic seal against the terminal.

In an aspect, if the coupling is female, the obturator is radially internal with respect to the main body.

In an aspect, if the coupling is male, the obturator is radially external with respect to the main body, preferably the obturator is radially interposed between said main body and the ring nut.

The obturator slides in contact with and is axially guided and centred by the main body.

In an aspect, the quick coupling comprises hooking/unhooking devices that are operatively active on the auxiliary body and on the obturator. The hooking/unhooking devices are configured for blocking/unblocking the axial movements of the obturator and of the auxiliary obturator relative to the main body by means of the movement of the ring nut.

The hooking/unhooking devices preferably comprise a hooking/unhooking cursor coaxial to the main body and mobile axially with respect to the main body and with respect to the obturator. The hooking/unhooking devices preferably further comprise hooking/unhooking elements that are mobile in through-holes afforded in the main body, wherein said hooking/unhooking elements are engaged/engageable with the hooking/unhooking cursor and with the auxiliary body. The hooking/unhooking elements are preferably small hooking/unhooking spheres.

The function of the cursor is to enable connection of the coupling only after the jaws have completely penetrated into the terminal to be connected, ensuring the best gripping conditions on the terminal and guaranteeing maximum mechanical seal condition.

Said at least a hooking/unhooking element is preferably mobile between a first axial blocking position of the auxiliary body and release of the cursor and a second axial blocking position of the cursor and of release of the auxiliary body. In an aspect, the hooking/unhooking cursor is radially interposed between the obturator and the main body.

In an embodiment, if the coupling is female, the hooking/unhooking cursor is radially external of the obturator and radially internal to the main body.

In an embodiment, if the coupling is male, the hooking/unhooking cursor is radially external of the main body and axially aligned to the obturator.

In an aspect, if the coupling is male, the cursor has a radially internal annular groove for engaging with the hooking/unhooking elements.

In an aspect, if the coupling is female, the cursor has a bevelled annular edge for engaging with the hooking/unhooking elements.

In an aspect, if the coupling is female, the ring nut has a radially internal annular seating configured for partly housing the hooking/unhooking elements.

In an aspect, if the coupling is male, the radially internal body has on a radially external surface thereof a bevelled annular edge engageable against the hooking/unhooking elements.

Preferably, the quick coupling comprises a first spring axially interposed between the main body and the auxiliary body and configured for pushing said auxiliary body towards the engaging portions of the jaws. Preferably, the quick coupling comprises a second spring axially interposed between the main body and the obturator and configured for pushing said obturator towards the engaging portions of the jaws. Preferably, the quick coupling comprises a third spring axially interposed between the main body and the hooking/unhooking cursor and configured for pushing said hooking/unhooking cursor towards the first end of the main body.

In an aspect, the auxiliary body is mobile between a first configuration corresponding to the first unhooked position of the jaw from the terminal, and a second configuration corresponding to the second hooked position to the terminal. In the first configuration, the auxiliary body is in a retracted position with respect to the engaging portions of the jaws. In the second configuration, the auxiliary body is in an advanced position towards the engaging portions of the jaws.

### Brief description of the drawings

Further characteristics and advantages will more fully emerge from the detailed description that follows of two preferred but not exclusive embodiments of a quick coupling according to the present invention.

This description will be explained below with reference to the attached drawings, provided solely for indicative and therefore non-limiting purposes, in which:
- figure 1 shows a section according to a radial plane and in a first operating configuration of a female quick coupling according to the present invention associated to a male threaded terminal;
- figure 1A is a front view of some elements of the quick coupling of figure 1 in a first position;
- figure 2 illustrates the female quick coupling of figure 1 in a different operating configuration;
- figure 3 illustrates the female quick coupling of figure 1 in a further operating configuration;
- the figure 3A illustrates the element of figure 1A in a second position;
- figure 4 is a perspective view of an element of the quick coupling of the preceding figures;
- figure 5 is a front view of a different element of the quick coupling of the preceding figures;
- figure 6 is a section according to a radial plane and in a first operating configuration of a male quick coupling according to the present invention associated to a female threaded terminal;
- figure 6A is a front view of some elements of the coupling of figure 6 in a first position;
- figure 7 illustrates the male quick coupling of figure 6 in a different operating configuration;
- figure 8 illustrates the male quick coupling of figure 6 in a further operating configuration;
- figure 8A illustrates the element of figure 6A in a second position.

### Detailed description of preferred embodiments of the invention

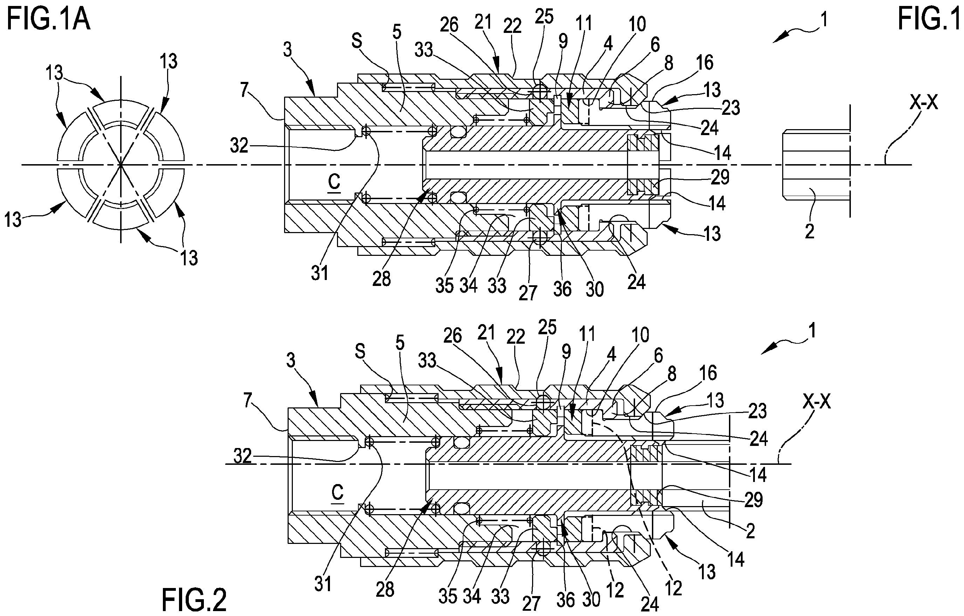

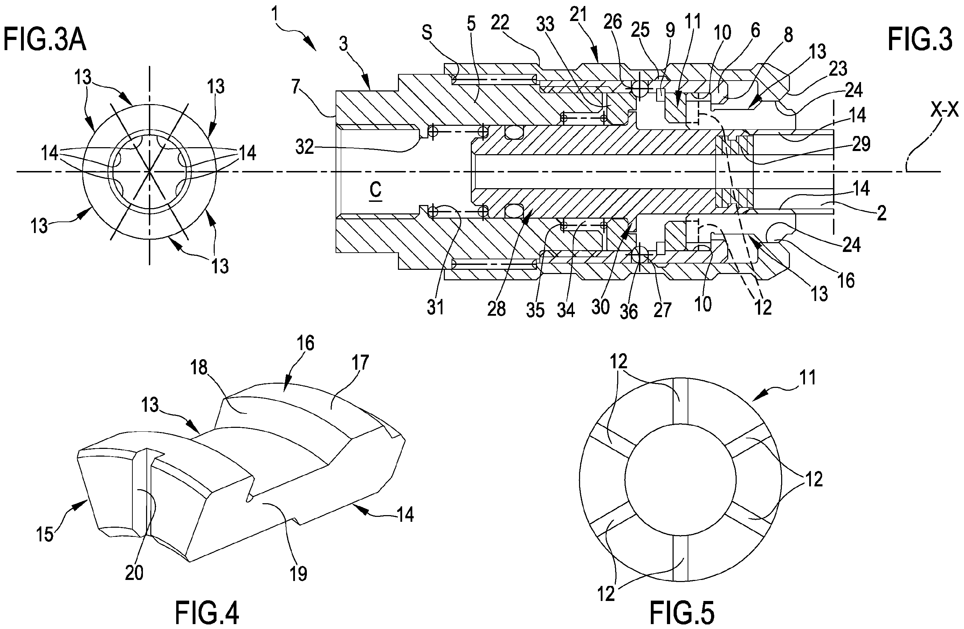

With reference to the figures, 1 indicates overall a quick coupling for threaded or profiled terminals. Figures 1-3 illustrate in particular a female quick coupling associated to a male threaded terminal 2. Figure 1 illustrates the quick coupling 1 in a first configuration in which the terminal 2 is separated and unhooked from the quick coupling 1. Figure 3 illustrates the quick coupling 1 in a second configuration in which the terminal 2 is hooked to the quick coupling 1. Figure 2 illustrates an intermediate situation where hooking is about to take place.

The quick coupling 1 comprises a substantially tubular main body 3 which extends along a main axis "X-X". The main body 3 internally delimits, together with other elements described in the following, a passage conduit C for a fluid. The main body 3 is shaped by a substantially tubular first portion 4 axially flanked and removably screwed to a substantially tubular second portion 5. The main body 3 has a first end 6 (belonging to the first portion 4) configured for removably connecting to a terminal 2 and a second end 7 (belonging to the second portion 5) opposite the first end 6 and configured for connecting, for example in a known way (preferably by screwing) with a tubing (not illustrated) of a circuit.

The first portion 4 of the main body 3 has an annular end portion 8 which delimits, at an axially internal position and in cooperation with a stop ring 9, an annular seating 10 facing radially towards the main axis "X-X" and coaxial to said main axis "X-X".

A guide ring 11 is housed in the annular seating 10, which has a face turned towards the first end 6 of the main body 3. Radial guides 12 are fashioned on said face, which radial guides 12 are defined by radially-extending and angularly equidistanced reliefs. In the illustrated embodiment of figure 5, the guide ring 11 has six radial reliefs 12 arranged at about 60° from one another.

The female quick coupling 1 further comprises six jaws 13 arranged about the main axis "X-X". The jaws 13 are fashioned from an appropriately profiled single tubular body (not illustrated) which is cut along axial planes, i.e. flat and containing the main axis of said tubular body. Each jaw 13 therefore has, as is more clearly visible in figure 4, an axially elongate profile and an arched section. In other words the jaw 13 has a shape of a tubular sector and, preferably, the jaws 13 all have the same angular amplitude.

Each jaw 13 has an engaging portion 14 with the terminal 2 located at an axial end of the jaw 13 and a guide portion 15 located at an opposite axial end of said jaw 13. The engaging portion 14 projects radially towards the inside. In the embodiment of figures 1-4, the engaging portion 14 has a radially internal partial threading configured for engaging with the male threaded terminal 2.

Each of the jaws 13 further has a radially external relief 16 positioned at the engaging portion 14. The radially external relief 16 has (figure 4) a partly tubular surface 17 substantially parallel to the main axis "X-X" and an inclined surface 18 for connecting with a central portion 19 of the jaw 13 that is axially interposed between the engaging portion 14 and the guide portion 15.

The guide portion 15 has a radial thickness that is larger than the central portion 19 and defines, on a face thereof facing towards the opposite side with respect to the guide portion 15, a radial groove 20 which extends over the whole thickness of the guide portion 15. The radial groove 20 is dimensioned for housing a radial relief 12 of the guide ring 11 so that the relief 12 and groove 20 can slide/translate reciprocally in a radial direction but do not displace reciprocally in a circumferential direction.

As can be seen in figure 1-3, the guide portions 15 are partly housed in the annular seating 10 and coupled to the guide ring 11 by means of the radial grooves 20. The engaging portions 14 of the jaws 13 project axially and at least partly beyond the first end 6 of the main body 3.

The guide ring 11 is axially retained in the main body 3 but is free to rotate about the main axis "X-X". The jaws 13 are free to rotate about the same main axis "X-X" solidly with the guide ring 11 and can translate radially with respect to the guide ring 11, as will be more fully explained in the following.

In particular, each of the jaws 13 is mobile between a first more distanced position from the main axis "X-X" and a closer second position to said main axis "X-X".

In the first position (figures 1, 1A and 2), a radially external surface of each guide portion 15 of the jaws 13 lies in contact with a bottom surface of the annular seating 10 (and is retained there in a way that will be explained in detail in the following).

In the second position (figures 3 and 3A), said radially external surface of each guide portion 15 of the jaws 13 is radially distanced from the bottom surface of the annular seating 10 (and is retained there in a way that will be explained in detail in the following).

With reference to figures 1A and 3A, in the first position (figure 1A, unhooked terminal), the jaws 13 are radially expanded and circumferentially distanced from one another. In the second position (figure 3A, unhooked terminal), the jaws 13 are radially contracted and circumferentially flanked to one another.

The quick coupling 1 comprises an auxiliary body 21 that is substantially tubular and axially slidable with respect to the main body 3. In the embodiment of figure 1, the auxiliary body 21 is a ring nut 22 that surrounds the main body 3 and can slide thereon. In the radially intermediate position between the ring nut 22 and the second portion 5 of the main body 3 a first spring S is located, which lies in an annular gap delimited between the ring nut 22 and the second portion 5. The first spring S is helical and coaxially surrounds the main axis "X-X". The first spring S lies in abutment against an annular surface of the main body 3 perpendicular to the main axis "X-X" and facing toward the first end 6 of the main body 3 and against an annular surface of the ring nut 22 perpendicular to the main axis "X-X" and facing towards said annular surface of the main body 3. The first spring S is configured for pushing the ring nut 22 towards the engaging portions 14 of the jaws 13.

An axial end of the ring nut 22 extends beyond the first end 6 of the main body 3 and lies substantially at the radially external reliefs 16 of the jaws 13. Said axial end has a bevel defined by a radially internal truncoconical surface 23 and which diverges in a distancing direction from the first end 6. The axial end further has a radially internal cylindrical surface 24 which extends from the truncoconical surface 23 towards the first end 6.

The radially internal cylindrical surface 24 and the diverging truncoconical surface 23 constitute an operating portion configured for engaging with the radially external reliefs 16 of the jaws 13. The ring nut 22 and the operating portion 23, 24 thereof constitute activating devices of the quick coupling 1 operatively engaged with the jaws 13 and configured for determining the passage of the jaws 13 between the first position and the second position.

In the first configuration (figure 1), the diverging truncoconical surface 23 lies in contact with the inclined surfaces 18 of the jaws 13.

In the second configuration (figure 3), the radially internal cylindrical surface 24 is located in contact with the partly tubular surfaces 17 of the jaws 13. In the said second configuration, the ring nut 22 lies on the radially external reliefs 16 of the jaws 13 and keeps said jaws 13 in the second position (figures 3 and 3A).

The ring nut 22 has a radially internal annular groove 25 on a radially internal surface thereof. The first portion 4 of the main body 3 has radial through-holes 26. A plurality of hooking/unhooking elements 27, defined by respective small spheres, are slidably inserted in the through-holes 26 of the first portion 4 of the main body 3.

In the first configuration (figure 1), the small spheres 27 radially project towards the outside of the respective through-holes 26 and partly lie in the radially internal annular groove 25 of the ring nut 22, preventing the reciprocal axial movement of the ring nut 22 and the main body 3. In the second configuration (figure 3), the small spheres 27 radially project towards the inside of the respective through-holes 26 and are positioned out of the radially internal annular groove 25.

The quick coupling 1 of figure 1 further comprises a substantially tubular obturator 28 that is also coaxial to the main body 3. The obturator 28 is radially internal of the main body 3, and is axially mobile with respect to the main body 3. The obturator 28 has a central passage that is coaxial to the main axis "X-X" and together with the main body 3 delimits the passage conduit C for the fluid crossing the quick coupling 1. The obturator 28 has a head end 29 provided with an appropriate seal and destined to enter into contact with a head end of the terminal 2 (second configuration illustrated in figure 3).

The obturator 28 has a radially external stop ring 30 fashioned at an axially intermediate portion. The stop ring 30 is configured for entering into contact with the guide ring 11, so as to prevent the complete exit of the obturator 28 from the first end 6 of the main body 3.

A second spring 31 is axially interposed between the main body 3 and the obturator 28 and is configured for pushing said obturator 28 towards the engaging portions 14 of the jaws 13. The illustrated second spring 31 is helical, coaxial to the main axis "X-X". The second spring 31 lies in abutment against a blocking ring 32 which extends radially internally of the main body 3 and against a rear surface of the obturator 28 perpendicular to the main axis "X-X" and facing towards said blocking ring 32. When the quick coupling 1 is in the first configuration, the second spring 31 pushes the stop ring 30 against the guide ring 11.

The quick coupling 1 comprises a hooking/unhooking cursor 33, also annular, coaxial to the main body 3 and mobile axially with respect to the main body 3 and with respect to the obturator 28. In figure 1 the hooking/unhooking cursor 33 externally surrounds the obturator 28 and is radially internal of the main body 3. In particular, the hooking/unhooking cursor 33 is housed in a variable-volume chamber 34 radially delimited between the main body 3 and the obturator 28. Said chamber 34 further houses a third spring 35 axially interposed between the main body 3 and the hooking/unhooking cursor 33.

The third spring 35 is helical and coaxially surrounds the main axis "X-X". The third spring 35 lies in abutment against an annular surface of the main body 3 perpendicular to the main axis "X-X" and facing toward the first end 6 of the main body 3 and against an annular surface of the hooking/unhooking cursor 33 perpendicular to the main axis "X-X" and facing towards said surface annular of the main body 3. The third spring 35 is configured for pushing the hooking/unhooking cursor 33 towards the first end 6 of the main body 3 and against the stop ring 9.

The hooking/unhooking cursor 33 has a bevelled annular edge 36 thereof substantially facing towards said stop ring 9.

In the unhooked position from the terminal 2, illustrated in figure 1, the quick coupling 1 is in the first configuration. In the first configuration, the hooking/unhooking elements 27 lie partly in the radially internal annular groove 25 of the ring nut 22 and against a radially external surface of the hooking/unhooking cursor 33. The ring nut 22 is axially blocked. The hooking/unhooking cursor 35 is in abutment against the stop ring 9. The second spring 31 pushes the obturator 28 against the guide ring 11.

In sad first configuration, a radially external surface of the obturator 28 close to the head end 29 is located at the engaging portions 14 of the jaws 13. This radially external surface of the obturator 28 rests against the engaging portions 14 and prevents the jaws 13 from radially closing. The ring nut 22 is retained in an axially retracted position from the hooking/unhooking elements 27 that project radially from the through-holes 26 so that the diverging truncoconical surface 23 lies in contact with the inclined surfaces 18 of the jaws 13.

To hook the terminal 2 to the quick coupling 1, the operator grips the ring nut 22 and inserts the male terminal 2 between the engaging portions 14 of the jaws 13. The male terminal 2 rests against the head end 29 of the obturator 28 guided and centred by the jaws 13.

The terminal 2 pushes the obturator 28 axially towards the second end 7 opposed first by only the second spring 31 which partly compresses. This movement brings the stop ring 30 against the hooking/unhooking cursor 33 which is also pushed towards the second end 7 opposed by the third spring 35. The retracting of the hooking/unhooking cursor 33 frees the small spheres 27 which move radially towards the inside, taking up a position against the bevelled annular edge 36 of the hooking/unhooking cursor 33. The small spheres 27 exit from the radially internal annular groove 25, freeing the ring nut 22 that can slide forwards towards the first end 6.

The retracting of the obturator 28 also frees the engaging portions 14 of the jaws 13 which can move radially towards the inside. The diverging truncoconical surface 23 of the ring nut 22 pushes radially on the radially external reliefs 16 of the jaws 13 and towards the main axis ""X-X"" and the jaws 13 radially close on the male terminal 2 by engaging the threaded portion thereof with the threading of said male terminal 2 (figure 3).

The jaws 13, guided by the radial guides 12 and by the annular end portion 8, radially translate together, without inclining and without bending.

The hooked position is stable as in the second configuration the axial movement of the hooking/unhooking cursor 33 is prevented by the small spheres 27 retained in position against the bevelled annular edge 36 by the ring nut 22 located in the advanced position.

In the hooked position and when the quick coupling 1 is subjected to pressure, the cursor 33 leaves the obturator 28 free to move axially by effect of the compression of the seal housed on the top 29 thereof due to the working pressure. The jaws 13 are radially constrained by the radially internal cylindrical surface 24 of the ring nut 22 and axially by the annular end portion 8.

The pressure force exerted by the obturator 28 on the connected terminal 2 is initially ensured by the action of the second spring 31 when the fluid pressure is minimum, and then the thrust increases in a proportional way to the pressure that is introduced into the quick coupling 1.

To unhook the quick coupling 1 from the terminal 2, the operator pulls the ring nut 22 in a distancing direction from the terminal 2 in opposition to the first spring S. The ring nut 22 slides axially on the main body 3 towards the second end 7, compressing the first spring S up to when the small spheres 27 partly enter into the radially internal annular groove 25, freeing the hooking/unhooking cursor 33 and the obturator 28 and axially blocking the ring nut 22.

The retracting of the ring nut 22 also frees the radially external reliefs 16 of the jaws 13. At this point, the jaws 13 are free to open radially (translating without inclining or flexing). The obturator 28 pushed by the second spring 31 inserts between the engaging portions 14 and determines the radial opening of the jaws 13 enabling the extraction of the male terminal 2.

The hooking/unhooking cursor 33 and the hooking/unhooking elements 27 (small spheres) constitute hooking/unhooking devices configured for blocking/unblocking the axial movements of the obturator 28 and of the ring nut 22 relative to the main body 3 by means of the movement of the ring nut 22.

In an embodiment that is not illustrated, the guide ring has radial grooves instead of radial reliefs and each jaw has a radial relief instead of the radial groove.

In an embodiment that is not illustrated, the quick coupling is identical to the quick coupling of figure 1, except for the fact that the jaws 13 of the quick coupling 1 are not threaded as they engage with the not-threaded male terminal 2, but are only profiled, not illustrated.

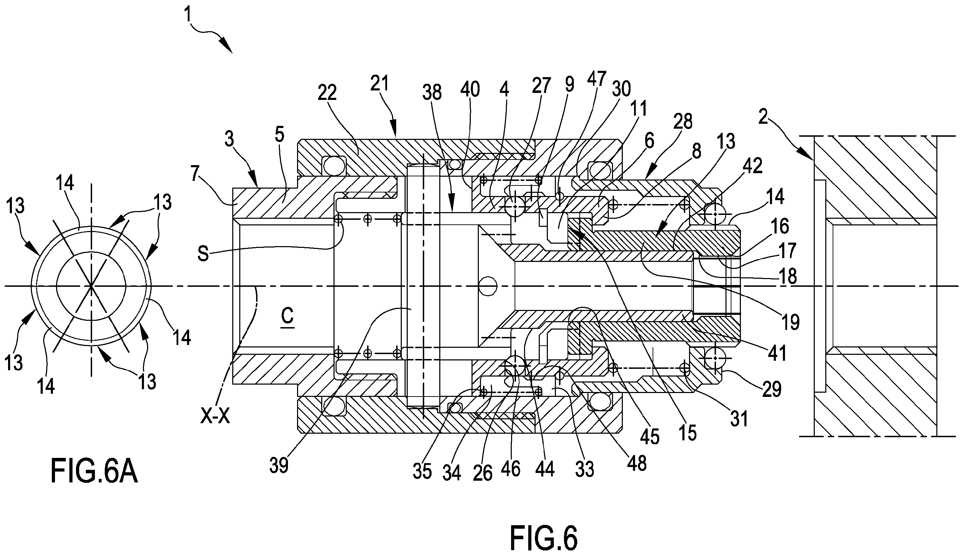

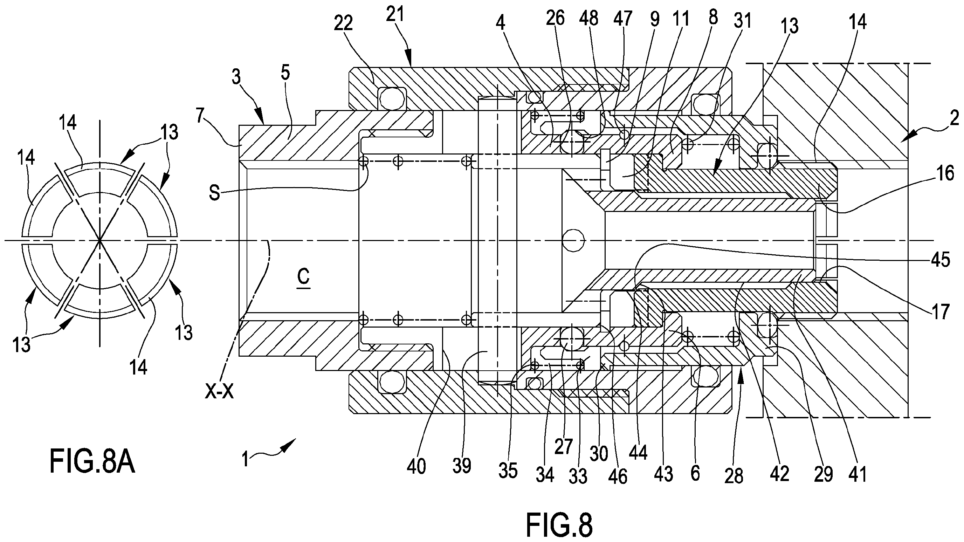

In a different embodiment, again according to the present invention and illustrated in figures 6-8, the quick coupling 1 is of the male type and the terminal 2 is female and internally threaded. Figure 6 illustrates the quick coupling 1 in a first configuration in which the terminal 2 is separated and unhooked from the quick coupling 1. Figure 8 illustrates the quick coupling 1 in a second configuration in which the terminal 2 is hooked to the quick coupling 1. As can be noted, the same reference numbers have been used for the elements corresponding to those of the quick coupling of figure 1.

The quick coupling 1 of figure 6 comprises a substantially tubular main body 3 which extends along a main axis "X-X" and is formed by a first portion 4 removably screwed to a second portion 5. The main body 3 also has a first end 6 and a second end 7.

The first portion 4 of the main body 3 has an annular end portion 8 which delimits, at an axially internal position and in cooperation with a stop ring 9, an annular seating 10 facing radially towards the main axis "X-X" and coaxial to said main axis "X-X".

A guide ring 11 is housed in the annular seating 10, which guide ring 11 is alike the one illustrated in figure 5 and described above with reference to the female coupling.The male quick coupling 1 further comprises six jaws 13 arranged about the main axis X-X, alike to those described for the female coupling.

Differently to the jaws 13 described in the foregoing, the engaging portion 14 of the jaws 13 of the male quick coupling 1 projects radially towards the outside. In the embodiment of figures 6-8, the engaging portion 14 has a radially external partial threading configured for engaging with the female threaded terminal 2.

Each of the jaws 13 further has a radially internal relief 16 positioned at the engaging portion 14. The radially internal relief 16 has (figure 6) a partly tubular surface 17 substantially parallel to the main axis "X-X" and an inclined surface 18 for connecting with a central portion 19 of the jaw 13 that is axially interposed between the engaging portion 14 and the guide portion 15. The guide portion 15 is structurally identical or similar to the guide portion illustrated in figure 4.

Also the coupling between the guide portions 15 and the radial grooves 20 is identical to what is described above in detail for the female quick coupling 1. The jaws 13 can therefore slide/translate in a radial direction but cannot reciprocally displace in the circumferential direction.The guide ring 11 is free to rotate about the main axis "X-X" solidly and the jaws 13 are free to translate about the main axis "X-X" in solid constraint with the guide ring 11.

Opposite than with the female coupling, each of the jaws 13 is mobile between a first closer position to the main axis "X-X" and a second position more distanced from said main axis "X-X".

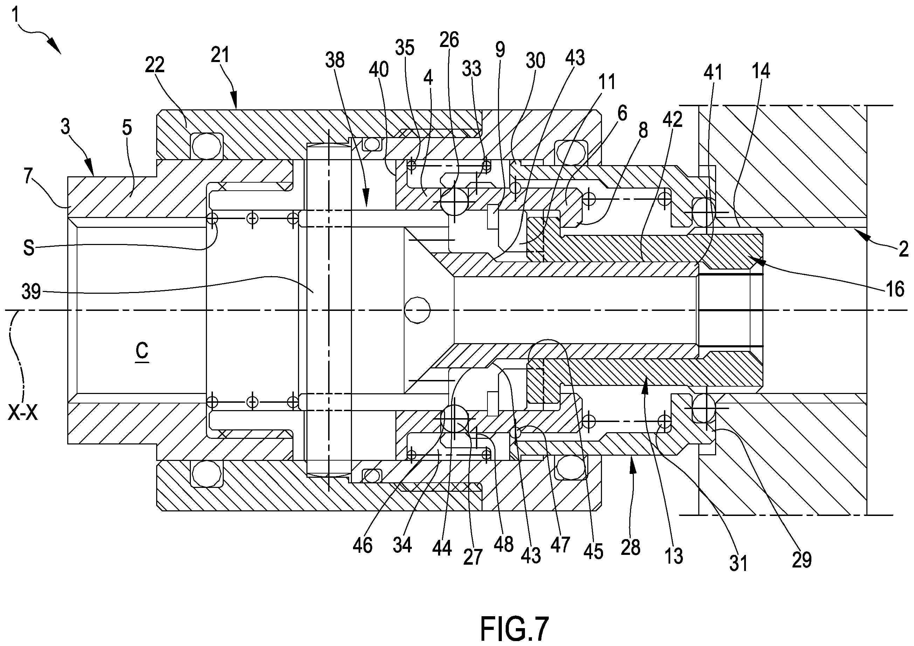

In the first position (figures 6, 6A and 7), a radially external surface of each guide portion 15 of the jaws 13 is radially distanced from a bottom surface of the annular seating 10 (and is retained there in a way that will be explained in detail in the following).

In the second position (figures 8 and 8A), said radially external surface of each guide portion 15 of the jaws 13 lies in contact with the bottom surface of the annular seating 10 (and is retained there in a way that will be explained in detail in the following).

With reference to figures 6A and 8A, in the first position (figure 6A), the jaws 13 are radially contracted and circumferentially flanked to one another. In the second position (figure 8A), the jaws 13 are radially expanded and circumferentially distanced from one another.

In the embodiment of figures 6-8, the auxiliary body 21 comprises a ring nut 22 that surrounds the main body 3 and can slide thereon, and a radially internal body 38 solidly connected to the ring nut 22.

The radially internal body 38 is positioned in the main body 3 and has an axial passage that, together with the main body 3, defines the passage conduit C of the fluid. At least a connecting element 39 is solidly connected to the ring nut 22 and to the radially internal body 38 and passes through a slot 40 that extends along the main axis "X-X" and is fashioned in the main body 3. In figures 6-8 the connecting element 39 is a pin that extends diametrically through the coupling 1.

In the axially intermediate position between the radially internal body 38 and the second portion 5 of the main body 3 a first spring S is located which lies in a radially internal position to the main body 3. The first spring S is helical and coaxially surrounds the main axis "X-X". The first spring S lies in abutment against an annular surface of the second portion 5 of the main body 3 perpendicular to the main axis "X-X" and facing toward the first end 6 of the main body 3 and against an annular surface of the radially internal body 38 perpendicular to the main axis "X-X" and facing towards said annular surface of the main body 3. The first spring S is configured for pushing the auxiliary body 21 towards the engaging portions 14 of the jaws 13.

A terminal end 41 of the radially internal body 38 which projects beyond the first end 6 of the main body 3 is configured for acting against the inclined surface 18 of the radially internal relief 16 of the jaws 13. The terminal end 41, together with a first cylindrical surface 42 of the radially internal body 38, are a part of an operating portion acting on the jaws 13. The operating portion of the radially internal body 38 further comprises a truncoconical surface 43 located at the guide portions 15 of the jaws 13 and converging towards the terminal end 41 and a second cylindrical surface 44 having a larger diameter than the first 42 and connected to the truncoconical surface 43.

The ring nut 22, the radially internal body 38 and the operating portion 41, 42, 43, 44 thereof constitute activating devices of the quick coupling 1 operatively engaged with the jaws 13.

In the first configuration (figure 6), the first cylindrical surface 42 lies in contact with the intermediate portion 19 of the jaws 13, the terminal end 41 is close but not in contact with the inclined surfaces 18 of the jaws 13, the truncoconical surface 43 is axially facing and distanced from a bevel 45 fashioned on each of the second portions of the jaws 13. The radially external reliefs 16 of the jaws 13 project from the terminal end 41 and the jaws 13 are in the first position.

In the second configuration (figure 8), the first cylindrical surface 42 lies in contact with the partly tubular surfaces 17 of the jaws 13, the terminal end 41 lies in a radially internal position with respect to said partly tubular surfaces 17, the truncoconical surface 43 rests on the bevels 45. The jaws 13 are in the second position.

The radially internal body 38 has on a radially external surface thereof a bevelled annular edge 46 coaxial to the main axis "X-X". Hooking/unhooking elements 27, defined by respective small spheres, are slidably inserted in the through-holes 11 of the main body 3.

In the first configuration (figure 6), the small spheres 27 radially project towards the inside of the respective through-holes 11 (in a way that will be described more fully in the following) and the projecting part thereof lies against the bevelled annular edge 46, preventing the axial movement of the radially internal body 38.

In the second configuration (figure 8), the small spheres 27 are completely retracted in the through-holes 11 and the first spring S axially pushes the radially internal body 38 against the stop ring 9.

In this embodiment, the obturator 28 is radially external of the main body 3, and is axially mobile with respect to said main body 3. In particular, the obturator 28 is radially interposed between said main body 3 and the ring nut 22.

The obturator 28 has a head end 29 destined to enter into contact with a head end of the terminal 2 (second configuration illustrated in figures 7 and 8) and provided with a seal. The obturator 28 has a stop ring 30 positioned at an end that is opposite the head end 29, radially external and configured for entering into contact with a radially internal relief of the ring nut 22, so as to prevent the complete exit of the obturator 28 from the ring nut 22.

A second spring 31 is axially interposed between the main body 3 and the obturator 28 and is configured for pushing said obturator 28 in a distancing direction from the first end 6 of the main body 3 and towards the engaging portions 14 of the jaws 13. The illustrated second spring 31 is helical, coaxial to the main axis "X-X". The second spring 31 is housed internally of the obturator 28 and is radially external of the jaws 13. The second spring 31, when the quick coupling 1 is in the first configuration, pushes the stop ring 30 against the radially internal relief of the ring nut 22.

In this embodiment, the hooking/unhooking cursor 33 is also tubular, coaxial to the main body 3 and mobile axially with respect to the main body 3 and with respect to the obturator 28. The hooking/unhooking cursor 33 externally surrounds the main body 3 and is axially aligned to the obturator 28. In particular, the hooking/unhooking cursor 33 is housed in the annular chamber 34 which further houses a third spring 35 axially interposed between the main body 3 and the hooking/unhooking cursor 33.

The third spring 35 is configured for pushing the hooking/unhooking cursor 33 towards the first end 6 of the main body 3 and against an auxiliary stop ring 47 mounted externally of the main body 3.

The hooking/unhooking cursor 33 has a radially internal annular groove 48.

In the unhooked position from the terminal 2, illustrated in figure 6, the quick coupling 1 is in the first configuration. In the first configuration, the hooking/unhooking elements 27 (small spheres) lie outside the annular groove 48 of the hooking/unhooking cursor 33 and lie against the bevelled annular edge 46 of the radially internal body 38.

The hooking/unhooking cursor 33 is in abutment against the auxiliary stop ring 47, pushed by the third spring 35.

The second spring 31 pushes the obturator 28 beyond the first end 6 of the main body 3 and the stop ring 30 retains the obturator 28 in the ring nut 22, opposing the action of the second spring 31.

In this first configuration, the radially internal surface of the obturator 28 close to the head end 29 is located at the engaging portions 14 of the jaws 13 and in contact therewith. Said radially internal surface of the obturator 28 prevents the jaws 13 from radially opening.

The auxiliary body 21 is retained in an axially retracted position by the hooking/unhooking small spheres 27 which project radially from the through-holes 11 and are in contact with the bevelled annular edge 46.

To hook the terminal 2 to the quick coupling 1, the operator grips the ring nut 22 and inserts the engaging portions 14 of the jaws 13 in the female terminal 2 (figure 7).

The female terminal 2 rests against the head end 29 of the obturator 28 guided and centred by the jaws 13. The terminal 2 pushes the obturator 28 axially towards the second end 7 opposed by the second spring 31 which partly compresses. This movement brings a rear end of the obturator 28 against the hooking/unhooking cursor 33. The obturator 28 rests against the hooking/unhooking cursor 33 and pushes it backwards towards the second end 7, opposed by the second and the third spring 31, 35, which partly compress, up to when the annular groove 48 of the hooking/unhooking cursor 33 reaches the hooking/unhooking small spheres 27.

At this point the hooking/unhooking small spheres 27 move radially towards the outside and enter the annular groove 48, freeing the radially internal body 38 and the ring nut 22 which can slide forwards towards the first end 6.

The retracting of the obturator 28 also frees the jaws 13 which can move radially towards the outside.

The terminal end 41 of the radially internal body 38 radially pushes the jaws 13 in a distancing direction from the main axis "X-X" and said jaws 13 open radially so as to engage the first threaded portion with the internal threading of the female terminal 2 (figure 8).

To unhook the quick coupling 1 from the terminal 2, the operator pulls the ring nut 22 in a distancing direction from the terminal 2 in opposition to the first spring S.

The ring nut 22 and the radially internal body 38 slide axially on the main body 3 towards the second end 7, compressing the first spring S up to when the partly tubular surfaces 17 are freed from the jaws 13 and the bevelled annular edge 46 of the radially internal body 38 is brought to the hooking/unhooking small spheres 27.

At this point, the jaws 13 are free to radially close, enabling the extraction of the first end 6 of the main body 3 from the female terminal 2 and at the same time the hooking/unhooking small spheres 27 move radially towards the inside and against the bevelled annular edge 46, freeing the hooking/unhooking cursor 33. The second and third springs 31, 35 push against the hooking/unhooking cursor 33 and the obturator 28 newly towards the first configuration (figure 6).

In an embodiment that is not illustrated, the quick coupling is identical to the quick coupling of figure 6, except for the fact that the jaws 13 of the quick coupling 1 are not threaded as they engage with a non-threaded female terminal 2, but are only profiled, not illustrated.

## Claims

1. A quick coupling for threaded or profiled terminals, comprising:
a substantially tubular main body (3) internally delimiting a passage conduit (C) for a fluid, wherein said main body (3) has a first end (6) configured for removably connecting to a terminal (2) and a second end (7) opposite the first end (6) and configured for connecting with a circuit;
a plurality of jaws (13) arranged about a main axis (X-X) of the passage conduit (C) and operatively engaged with the main body (3) at the first end (6), wherein each of said jaws (13) is radially mobile with respect to the main body (3) between a first unhooked position of the terminal (2) and a second hooked position to the terminal (2); wherein, during the radial movement between the first and the second position, the jaws (13) are configured for remaining parallel to one another and to the main axis (X-X);
activating devices (21) operatively engaged with said jaws (13) for determining passage thereof between the first position and the second position;
wherein the quick coupling comprises a guide ring (11) coaxial to the main body (3) and having radial guides (12) engaged to the plurality of jaws (13) for radially guiding the jaws (13) during movement between the first and the second position.

2. The quick coupling according to claim 1, wherein each jaw (13) comprises an engaging portion (14) with the terminal (2) and a guide portion (15) configured for slidably coupling with one of the radial guides (12).

3. The quick coupling according to claim 1 or 2, wherein each jaw (13) has a profile having an annular or tubular sector.

4. The quick coupling according to claim 1, 2 or 3, wherein each radial guide (12) is a radial relief engaged in a radial groove (20) of the respective jaw (13), or each radial guide (12) is a radial groove engaged with a radial relief of the respective jaw (13).

5. The quick coupling according to one of the preceding claims from 2 to 5, wherein each jaw (13) has an axially elongate shape, wherein a first axial end of the jaw (13) has the engaging portion (14) and a second axial end of the jaw (13), opposite the first, has the guide portion (15).

6. The quick coupling according to the preceding claim, wherein the guide ring (11) has a face provided with the reliefs or the radial grooves (20) and said face is coupled to the second axial ends of the jaws (13).

7. The quick coupling according to the preceding claim, wherein each of said second ends is slidably coupled to one relief/groove of the guide ring (11) so as to be able to radially translate, wherein each jaw (13) cannot rotate with respect to the guide ring (11) about the main axis (X-X).

8. The quick coupling according to one of the preceding claims, wherein the number of the jaws (13) is comprised between three and twelve.

9. The quick coupling according to one of the preceding claims, wherein the radial guides (12) are in a number equal to the jaws (13).

10. The quick coupling according to one of the preceding claims, wherein the radial guides (12) are angularly equidistanced.

11. The quick coupling according to the preceding claims, wherein the guide ring (11) is free to rotate together with the jaws (13) with respect to the main body (3) and about the main axis (X-X).

12. The quick coupling according to one of the preceding claims, wherein the activating devices (21) comprise a substantially tubular auxiliary body sliding axially with respect to the main body (3); wherein said auxiliary body has an operating portion (41, 42, 43, 44) engaged or engageable with the jaws (13); wherein the auxiliary body (21) is axially mobile with respect to the main body (3) between a retracted position with respect to the first end (6) of the main body (3) corresponding to the unhooked position of the jaws (13), and an advanced position, in which it pushes the jaws (13) radially into the second hooked position to the terminal (2).

13. The quick coupling according to one of the preceding claims from 2 to 12, comprising an obturator (28) that is substantially tubular and coaxial to the main body (3), wherein the obturator (28) is axially mobile with respect to the main body (3) between an advanced position towards the first end (6) of the main body (3), and wherein it radially and at least partly surmounts the engaging portions (14) of the jaws (13) so as to retain them in the first unhooked position from the terminal (2), and a retracted position in which it frees the engaging portions (14) and enables radial movement of the jaws (13).

14. The quick coupling according to one of the preceding claims, wherein if said quick coupling is female, in the first position the jaws (13) are radially farther from the main axis (X-X) with respect to the second position; wherein if the quick coupling is male, in the first position the jaws (13) are radially closer to the main axis (X-X) with respect to the second position.

## Patentansprüche

1. Schnellkupplung für mit einem Gewinde versehene oder profilierte Endstücke, umfassend:
einen im Wesentlichen rohrförmigen Hauptkörper (3), welcher innerhalb einen Durchgangskanal (C) für ein Fluid begrenzt, wobei der Hauptkörper (3) ein erstes Ende (6), welches dazu eingerichtet ist, lösbar mit einem Endstück (2) verbunden zu sein, und ein zweites Ende (7) aufweist, welches dem ersten Ende (6) entgegengesetzt ist und dazu eingerichtet ist, mit einem Kreislauf verbunden zu sein;
eine Mehrzahl von Klauen (13), welche um eine Hauptachse (X-X) des Durchgangskanals (C) herum angeordnet sind und an dem ersten Ende (6) betriebsmäßig mit dem Hauptkörper (3) in Eingriff stehen, wobei jede der Klauen (13) in Bezug auf den Hauptkörper (3) zwischen einer ersten, ausgehakten Position des Endstücks (2) und einer zweiten, eingehakten Position des Endstücks (2) radial beweglich ist; wobei, während der radialen Bewegung zwischen der ersten und der zweiten Position, die Klauen (13) dazu eingerichtet sind, parallel zueinander und zu der Hauptachse (X-X) zu bleiben;
Aktivierungsvorrichtungen (21), welche betriebsmäßig mit den Klauen (13) in Eingriff stehen, um einen Durchgang davon zwischen der ersten Position und der zweiten Position zu bestimmen;
wobei die Schnellkupplung einen Führungsring (11) umfasst, welcher koaxial zu dem Hauptkörper (3) ist und radiale Führungen (12) aufweist, welche mit der Mehrzahl von Klauen (13) in Eingriff stehen, um die Klauen (13) während der Bewegung zwischen der ersten und der zweiten Position radial zu führen.

2. Schnellkupplung nach Anspruch 1, wobei jede Klaue (13) einen Eingriffsabschnitt (14) mit dem Endstück (2) und einen Führungsabschnitt (15) umfasst, welcher dazu eingerichtet ist, verschiebbar mit einer der radialen Führungen (12) gekoppelt zu sein.

3. Schnellkupplung nach Anspruch 1 oder 2, wobei jede Klaue (13) ein Profil aufweist, welches einen ringförmigen oder rohrförmigen Sektor aufweist.

4. Schnellkupplung nach Anspruch 1, 2 oder 3, wobei jede radiale Führung (12) eine radiale Kontur ist, welche in einer radialen Nut (20) der jeweiligen Klaue (13) in Eingriff steht, oder jede radiale Führung (12) eine radiale Nut ist, welche mit einer radialen Kontur der jeweiligen Klaue (13) in Eingriff steht.

5. Schnellkupplung nach einem der vorhergehenden Ansprüche 2 bis 5, wobei jede Klaue (13) eine axial verlängerte Form aufweist, wobei ein erstes axiales Ende der Klaue (13) den Eingriffsabschnitt (14) aufweist und ein zweites axiales Ende der Klaue (13), welches dem ersten entgegengesetzt ist, den Führungsabschnitt (15) aufweist.

6. Schnellkupplung nach dem vorhergehenden Anspruch, wobei der Führungsring (11) eine Fläche aufweist, welche mit den Konturen oder den radialen Nuten (20) bereitgestellt ist, und die Fläche mit den zweiten axialen Enden der Klauen (13) gekoppelt ist.

7. Schnellkupplung nach dem vorhergehenden Anspruch, wobei jedes der zweiten Enden derart verschiebbar mit einer Kontur/Nut des Führungsrings (11) gekoppelt ist, dass es radial verschiebbar ist, wobei sich jede Klaue (13) in Bezug auf den Führungsring (11) nicht um die Hautachse (X-X) herum drehen kann.

8. Schnellkupplung nach einem der vorhergehenden Ansprüche, wobei die Anzahl der Klauen (13) zwischen drei und zwölf umfasst ist.

9. Schnellkupplung nach einem der vorhergehenden Ansprüche, wobei die radialen Führungen (12) in einer Anzahl vorliegen, welche gleich wie die der Klauen (13) ist.

10. Schnellkupplung nach einem der vorhergehenden Ansprüche, wobei die radialen Führungen (12) mit einem gleichmäßigen Winkelabstand voneinander angeordnet sind.

11. Schnellkupplung nach einem der vorhergehenden Ansprüche, wobei sich der Führungsring (11) zusammen mit den Klauen (13) in Bezug auf den Hauptkörper (3) und um die Hauptachse (X-X) herum frei drehen kann.

12. Schnellkupplung nach einem der vorhergehenden Ansprüche, wobei die Aktivierungsvorrichtungen (21) einen im Wesentlichen rohrförmigen Hilfskörper umfassen, welcher in Bezug auf den Hauptkörper (3) axial verschiebbar ist; wobei der Hilfskörper einen Funktionsabschnitt (41, 42, 43, 44) aufweist, welcher mit den Klauen (13) in Eingriff steht oder in Eingriff bringbar ist; wobei der Hilfskörper (21) in Bezug auf den Hauptkörper (3) zwischen einer in Bezug auf das erste Ende (6) des Hauptkörpers (3) zurückgezogenen Position, welche der ausgehakten Position der Klauen (13) entspricht, und einer ausgefahrenen Position axial beweglich ist, in welcher er die Klauen (13) radial in die zweite, eingehakte Position an das Endstück (2) drückt.

13. Schnellkupplung nach einem der vorhergehenden Ansprüche 2 bis 12, umfassend einen Verschluss (28), welcher im Wesentlichen rohrförmig und koaxial zu dem Hauptkörper (3) ist, wobei der Verschluss (28) in Bezug auf den Hauptkörper (3) zwischen einer vorgeschobenen Position in Richtung des ersten Endes (6) des Hauptkörpers (3), und wobei er die Eingriffsabschnitte (14) der Klauen (13) radial und wenigstens teilweise überwindet, um sie in der ersten, ausgehakten Position von dem Endstück (2) zu halten, und einer zurückgezogenen Position axial beweglich ist, in welcher er die Eingriffsabschnitte (14) löst und eine radiale Bewegung der Klauen (13) ermöglicht.

14. Schnellkupplung nach einem der vorhergehenden Ansprüche, wobei, wenn die Schnellkupplung weiblich ist, sich die Klauen (13) in der ersten Position in Bezug auf die zweite Position radial weiter von der Hauptachse (X-X) entfernt befinden; wobei, wenn die Schnellkupplung männlich ist, sich die Klauen (13) in der ersten Position in Bezug auf die zweite Position radial näher an der Hauptachse (X-X) befinden.

## Revendications

1. Raccordement rapide de terminaux filetés ou profilés, comprenant :
un corps principal sensiblement tubulaire (3) délimitant au plan interne un conduit de passage (C) pour un liquide, ledit corps principal (3) ayant une première extrémité (6) configurée pour le raccordement de manière amovible à un terminal (2) et une seconde extrémité (7) opposée à la première extrémité (6) et configurée pour le raccordement à un circuit ;
une pluralité de mâchoires (13) disposées autour d'un axe principal (X-X) du conduit de passage (C) et fonctionnellement engagées avec le corps principal (3) à la première extrémité (6), chacune desdites mâchoires (13) étant radialement mobile par rapport au corps principal (3) entre une première position non crochetée du terminal (2) et une seconde position crochetée au terminal (2) ; durant le mouvement radial entre la première et la seconde position, les mâchoires (13) sont configurées pour demeurer parallèles l'une par rapport à l'autre et à l'axe principal (X-X) ;
des dispositifs d'activation (21) fonctionnellement engagés avec lesdites mâchoires (13) pour déterminer leur passage entre la première position et la seconde position ;
le raccordement rapide comprenant un anneau de guidage (11) coaxial vis-à-vis du corps principal (3) et ayant des guides radiaux (12) engagés vis-à-vis de la pluralité des mâchoires (13) pour le guidage radialement des mâchoires (13) durant le mouvement entre la première et la seconde position.

2. Raccordement rapide selon la revendication 1, chaque mâchoire (13) comprenant une partie d'engagement (14) avec le terminal (2) et une partie de guidage (15) configurée pour le raccordement de manière coulissante avec l'un des guides radiaux (12).

3. Raccordement rapide selon la revendication 1 ou 2, chaque mâchoire (13) ayant un profil présentant un secteur annulaire ou tubulaire.

4. Raccordement rapide selon la revendication 1, 2 ou 3, chaque guide radial (12) étant un relief radial engagé dans une rainure radiale (20) de la mâchoire respective (13), ou chaque guide radial (12) étant une rainure radiale engagée avec un relief radial de la mâchoire respective (13).

5. Raccordement rapide selon l'une des revendications précédentes de 2 à 5, chaque mâchoire (13) ayant une forme axialement allongée, une première extrémité axiale de la mâchoire (13) ayant la partie d'engagement (14) et une seconde extrémité axiale de la mâchoire (13), opposée à la première, présentant la partie de guidage (15).

6. Raccordement rapide selon la revendication précédente, l'anneau de guidage (11) ayant une face munie de reliefs ou de rainures radiales (20) et ladite face étant raccordée aux secondes extrémités axiales des mâchoires (13).

7. Raccordement rapide selon la revendication précédente, chacune desdites secondes extrémités étant raccordée de manière coulissante à un relief/une rainure de l'anneau de guidage (11) afin d'être capable d'effectuer radialement une translation, chaque mâchoire (13) ne pouvant pas tourner par rapport à l'anneau de guidage (11) autour de l'axe principal (X-X).

8. Raccordement rapide selon l'une des revendications précédentes, le nombre de mâchoires (13) étant compris entre trois et douze.

9. Raccordement rapide selon l'une des revendications précédentes, les guides radiaux (12) se présentant sous un nombre égal aux mâchoires (13).

10. Raccordement rapide selon l'une des revendications précédentes, les guides radiaux (12) étant équidistants de manière angulaire.

11. Raccordement rapide selon les revendications précédentes, l'anneau de guidage (11) étant libre de tourner conjointement aux mâchoires (13) par rapport au corps principal (3) et autour de l'axe principal (X-X).

12. Raccordement rapide selon l'une des revendications précédentes, les dispositifs d'activation (21) comprenant un corps auxiliaire sensiblement tubulaire coulissant axialement par rapport au corps principal (3) ; ledit corps auxiliaire ayant une partie de fonctionnement (41, 42, 43, 44) engagée ou pouvant être engagée avec les mâchoires (13) ; le corps auxiliaire (21) étant axialement mobile par rapport au corps principal (3) entre une position rétractée par rapport à la première extrémité (6) du corps principal (3) correspondant à la position non crochetée des mâchoires (13), et une position avancée, dans laquelle elle pousse les mâchoires (13) radialement dans la seconde position crochetée au niveau du terminal (2).

13. Raccordement rapide selon l'une des revendications précédentes de 2 à 12, comprenant un obturateur (28) qui est sensiblement tubulaire et coaxial par rapport au corps principal (3), l'obturateur (28) étant axialement mobile par rapport au corps principal (3) entre une position avancée vers la première extrémité (6) du corps principal (3), et où il surmonte radialement et au moins partiellement les parties d'engagement (14) des mâchoires (13) afin de les maintenir dans la première position non crochetée depuis le terminal (2), et une position rétractée dans laquelle il libère les parties d'engagement (14) et permet le mouvement radial des mâchoires (13).

14. Raccordement rapide selon l'une des revendications précédentes, dans lequel si ledit raccordement rapide est femelle, dans la première position les mâchoires (13) sont radialement plus éloignées de l'axe principal (X-X) par rapport à la seconde position ; dans lequel si le raccordement rapide est mâle, dans la première position les mâchoires (13) sont radialement plus proches de l'axe principal (X-X) par rapport à la seconde position.
